# EUROPÄISCHE PATENTSCHRIFT

(11) **EP 0 432 701 B1**
(45) Veröffentlichungstag und Bekanntmachung des Hinweises auf die Patenterteilung: **21.09.1994**
(21) Anmeldenummer: 90123731.3
(22) Anmeldetag: 10.12.1990
(51) Int. Cl.: B65G 15/52, A01D 17/10

(54) **Stabband für Stabbandförderer**
Slat conveyor belt
Bande transporteuse à lattes

(30) Priorität: 14.12.1989 DE 8914670 U
(43) Veröffentlichungstag der Anmeldung: 19.06.1991
(73) Patentinhaber: Jäger, Arnold, D-31303 Burgdorf (DE)
(72) Erfinder: Jäger, Andreas, D-31303 Burgdorf (DE); Röhrs, Friedrich, D-29227 Celle (DE)
(74) Vertreter: Depmeyer, Lothar

(56) Entgegenhaltungen:
- EP-A- 0 340 514
- DE-B- 1 033 130
- DE-U- 8 914 670
- NL-C- 56 846

## Beschreibung

Die Erfindung betrifft ein Stabband nach dem Gattungsbegriff des Anspruchs 1.

Ein derartiges Stabband ist aus der EP-A-0 340 514 bekannt. Bei diesem Stabband sind die Enden der Befestigungselemente auf der Rückseite des jeweiligen Bandes so abgewinkelt, daß sie parallel zur Oberfläche des Bandes verlaufend auf der Platte aufliegen. Bei einer derartigen Anordnung besteht jedoch die Gefahr, daß die Enden etwa durch Eindringen von Fremdkörpern hochgebogen werden und sich die Befestigungsstelle so lösen kann.

Aufgrund der Erfindung soll die durch eingetriebene Befestigungselemente sichergestellte Befestigung der Bügel so verbessert werden, daß ein ungewolltes Aufbiegen der Enden der Befestigungselemente verhindert wird.

Diese Aufgabe wird erfindungsgemäß dadurch gelöst, daß die Enden die Ränder der Platten übergreifen, zum Band hin zurückgebogen und geringfügig in das Band zurückgeführt sind.

Diese Ausführung hat den großen Vorteil, daß Fremdkörper die Enden nicht mehr unterfassen können; es ist daher auch ausgeschlossen, daß die Enden hochgebogen werden und daß somit die Befestigung der Bügel gefährdet wird. Eine derartige Anordnung der Befestigungselemente sichert die die Stabbefestigung auch bei größeren Belastungen. Eine Beschädigung des Bandkörpers durch die im Band befindlichen Spitzen tritt dabei nicht ein.

Weitere Einzelheiten der Erfindung werden anhand der Zeichnung erläutert, in der ein Ausführungsbeispiel der Erfindung dargestellt ist. Es zeigen :
- Fig. 1: eine Teildraufsicht auf ein Stabband für einen Stabbandförderer einer landwirtschaftlichen Erntemaschine,
- Fig. 2: einen Schnitt nach der Linie II - II von Fig. 1 und
- Fig. 3: einen Schnitt nach der Linie III - III von Fig. 2.

Das in Richtung des Pfeiles 1 umlaufende Stabband weist an beiden Rändern zugfeste, biegsame Bänder 2 auf, die durch quer verlaufende Stäbe 3 aus Stahl miteinander verbunden sind. Diese Stäbe dienen der Förderung, zugleich tritt infolge des gegenseitigen Abstandes der Stäbe 3 eine Siebung ein.

Die Bänder 2 bestehen aus Gummi od. dgl. und haben oben und unten eine Deckschicht aus Gummi und dazwischen paketartig zusammenfasste, gummierte Gewebelagen.

Die aufgrund der Erfindung vorgesehene Befestigung der Stabenden 7 an den Bändern 2 erfolgt durch einen Bügel 8 aus Stahl, der sich quer zum Stab 3 erstreckt. Die Enden 9 des Bügels 8 sind abgew-inkelt und sind an ihrer auf dem Band 2 aufliegenden Seite ballig gestaltet. Die Befestigung der Bügel 8 erfolgt durch aus Stahl bestehemde Krampen 16, die die Enden 9 durchsetzen und ohne Materialwegnahme in die Bänder 2 eingetrieben sind.

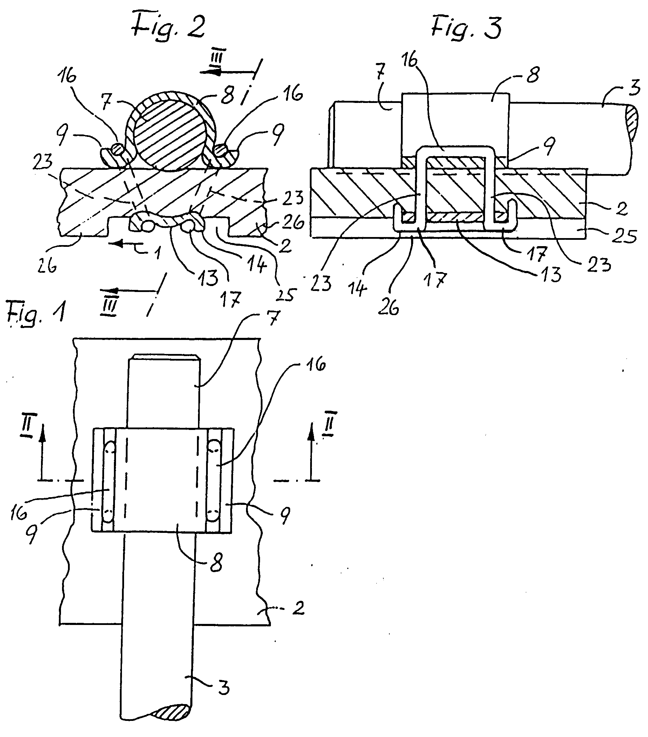

Den Bügeln 8 liegen auf der Innenseite der Bänder 2 befindliche Platten 13 aus Stahl gegenüber, durch die die Abschnitte 23 der Krampen 16 ebenfalls hindurchgeführt sind. Die Enden 17 der Krampen 16 sind abgewinkelt und liegen in rinnenförmigen Vertiefungen der Platte 13, die sich in Richtung der Stäbe 3 erstrecken; diese Enden übergreifen zudem die Ränder der Platte 13 und sind mit ihrem freien auslaufenden Abschnitt in das Band 2 zurückgeführt, wodurch der Formschluss zwischen der Platte 13 und den Enden 17 gesteigert wird.Im übrigen sind die Ränder 14 der Platte 13 gemäss Fig. 2 bogenförmig gestaltet, um die rinnenförmigen Vertiefungen zu schaffen und Einschneidungen der Plattenränder in das Band 2 zu unterbinden.

Wie aus Fig. 2 erkennbar ist, verlaufen die Abschnitte 23 v-förmig in der Weise, dass ihr gegenseitiger Abstand im Bereich der Bügel 8 grösser ist als im Bereich der Platten 13. Dadurch wird dem Umlauf der Bänder 2 Rechnung getragen. Auch die Enden 17 sind mit ihren Abbiegungen in den symmetrisch angeordneten Ebenen angeordnet, die durch die Abschnitt 23 bestimmt sind ( Fig. 2 ). Es sei noch erwähnt, dass die Platte 13 innerhalb einer quer zum Band 2 verlaufenden Lücke 25 zwischen zwei Zähnen 26 an der Innenseite der Bänder 2 angeordnet ist.

## Patentansprüche

1. Stabband für Stabbandförderer, vorzugsweise an landwirtschaftlichen Maschinen, insb. an Erntemaschinen, mit zwei oder mehreren, umlaufenden, biegsamen, zugfesten Bändern (2) die durch im Abstand voneinander angeordnete, quer zum Stabband angeordnete, aus Stahl od. dgl. bestehende Stäbe (3) verbunden sind, deren Enden (7) von einem quer zu den Stabenden gerichteten Bügel (8) umschlossen sind, dessen Enden (9) von in die unpräparierten Bänder (2) eingetriebenen Befestigungselementen (16) gehalten sind, die die abgewinkelten, auf dem Band (2) aufliegenden Enden (9) der Bügel (8) und auf der gegenüberliegenden Bandseite anliegende Platten (13) aus Stahl od. dgl. durchsetzen, wobei die Enden (17) der Befestigungselemente (16) abgewinkelt und mit einem abgewinkelten Teil auf den Platten (13) aufliegen, dadurch gekennzeichnet , dass die Enden (17) die Ränder der Platten (13) übergreifen, zum Band (2) hin zurückgebogen und geringfügig in das Band (2) zurückgeführt sind.

2. Band nach Anspruch 1, dadurch gekennzeichnet, dass die Enden (17) in rinnenförmigen Vertiefungen der Platte (13) angeordnet sind.

3. Band nach Anspruch 1, dadurch gekennzeichnet, dass die in Bandlängsrichtung vorne und hinten liegenden Ränder der Platte (13) abgerundet oder vom Bandkörper weggeführt sind.

4. Band nach Anspruch 1, dadurch gekennzeichnet, dass die den Bandkörper durchsetzenden Abschnitte (23) der paarweise zusammengehörigen Befestigungselemente (16) v-förmig zueinander angeordnet sind in der Weise, dass ihr gegenseitiger Abstand im Bügelbereich grösser ist als auf der gegenüberliegenden Seite des Bandkörpers.

5. Band nach Anspruch 4, dadurch gekennzeichnet, dass die Abschnitte (23) symmetrisch v-förmig angeordnet sind ( in Richtung der Stäbe 3 gesehen ).

6. Band nach Anspruch 4, dadurch gekennzeichnet, dass die Abschnitte (23) und die Abbiegungen ( Enden 17 mit Übergriff ) eines Befestigungselementes ( U-förmige Krampe ) in oder praktisch in einer Ebene liegen, die durch die zusammengehörigen Abschnitte bestimmt ist.

7. Band nach Anspruch 1, dadurch gekennzeichnet, dass die Enden die den Bandrändern zugekehrten Ränder der Platten (13) übergreifen.

8. Band nach Anspruch 1, dadurch gekennzeichnet, dass für die Befestigungselemente beider Enden des Bügels (8) eine Platte (13) vorgesehen ist.

9. Band nach Anspruch 1 und 8, dadurch gekennzeichnet, dass die in das Band zurückgeführten Enden (17) im wesentlichen parallel zu den das Band in seiner Gesamtheit durchsetzenden Abschnitten (23) der Befestigungselemente (16) verlaufen ( Fig. 3 ).

## Claims

1. Barred belt for barred belt conveyors, preferably for use with agricultural machines, more especially harvesting machines, having two or more circumferential, flexible, substantially inextensible belts (2), which are connected by means of spaced-apart bars (3), which are disposed transversely relative to the barred belt and are formed from steel or the like, the ends (7) of said bars being surrounded by a clamp (8), which is orientated transversely relative to the bar ends, the ends (9) of said clamp being retained by securing members (16), which are inserted into the unprepared belts (2) and traverse the bent-over ends (9) of the clamps (8), which lie on the belt (2), and traverse plates (13), which lie on the oppositely situated side of the belt and are formed from steel or the like, the ends (17) of the securing members (16) being bent-over and lying with a bent-over portion on the plates (13), characterised in that the ends (17) overlap the edges of the plates (13), are bent back towards the belt (2) and extend slightly back into the belt (2).

2. Belt according to claim 1, characterised in that the ends (17) are disposed in groove-like indentations in the plate (13).

3. Belt according to claim 1, characterised in that the edges of the plate (13), which are situated at the front and rear when viewed with respect to the longitudinal direction of the belt, are rounded or extend away from the belt body.

4. Belt according to claim 1, characterised in that the portions (23), which traverse the belt body, of the securing members (16), which belong together in pairs, are disposed in a V-shaped configuration relative to one another in such a manner that their mutual spacing from each other in the clamp region is greater than on the oppositely situated side of the belt body.

5. Belt according to claim 4, characterised in that the portions (23) are symmetrically disposed in a V-shaped configuration (when viewed with respect to the direction of the bars 3).

6. Belt according to claim 4, characterised in that the portions (23) and the bent portions (ends 17 with overlap) of a securing member (U-shaped clip) lie in or virtually in a plane which is determined by the associated portions.

7. Belt according to claim 1, characterised in that the ends overlap the edges of the plates (13) facing the belt edges.

8. Belt according to claim 1, characterised in that a plate (13) is provided for the securing members of both ends of the clamp (8).

9. Belt according to claims 1 and 8, characterised in that the ends (17), which extend back into the belt, extend substantially parallel to the portions (23) of the securing members (16) which traverse the belt in its entirety (Fig. 3).

## Revendications

1. Bande à barreaux pour transporteur à barreaux, de préférence installée sur des machines agricoles, notamment sur des moissonneuses, comportant deux ou plusieurs bandes circulantes (2), flexibles et résistantes à la traction et qui sont reliées par des barreaux (3) disposés à distance les uns des autres, transversalement par rapport à la bande à barreaux et réalisés en acier ou analogue et dont les extrémités (7) sont entourées par un étrier (8) orienté transversalement par rapport aux extrémités des barreaux et dont les extrémités (9) sont retenues par des éléments de fixation (16) enfoncés dans les bandes non préparées (2) et qui traversent les extrémités coudées (9) des étriers (8), qui sont appliquées sur la bande (2), et des plaques (13) en acier ou analogue, qui sont appliquées sur la face opposée de la bande, les extrémités (17) des éléments de fixation (16) étant coudées et s'appliquant par une partie coudée contre les plaques (13), caractérisée par le fait que les extrémités (17) enserrent les bords des plaques (13), sont repliées en direction de la bande (2) et rentrent légèrement dans la bande (2).

2. Bande suivant la revendication 1, caractérisée par le fait que les extrémités (17) sont disposées dans des renfoncements en forme de rainures de la plaque (13).

3. Bande suivant la revendication 1, caractérisée par le fait que les bords de la plaque (13), qui sont situés en avant et en arrière dans la direction longitudinale de la bande, sont arrondis ou s'écartent du corps de la bande.

4. Bande suivant la revendication 1, caractérisée par le fait que les sections (23), qui traversent le corps de la bande, des éléments de fixation (16) réunis par couples sont disposées l'une par rapport à l'autre en formant un V de telle sorte que leur distance réciproque est plus importante au niveau de l'étrier que sur la face opposée du corps de la bande.

5. Bande suivant la revendication 4, caractérisée par le fait que les sections (23) sont disposées symétriquement en formant un V (lorsqu'on regarde dans la direction des barreaux 3).

6. Bande suivant la revendication 4, caractérisée par le fait que les sections (23) et les parties coudées (extrémités 17 à débordement) d'un élément de fixation (crampon en forme de U) sont situées dans ou pratiquement dans un plan, qui est déterminé par les sections assemblées.

7. Bande suivant la revendication 1, caractérisée par le fait que les extrémités s'engagent par-dessus les bords des plaques (13), qui sont tournées vers les bords de la bande.

8. Bande suivant la revendication 1, caractérisée par la fait qu'une plaque (13) est prévue pour les éléments de fixation des deux extrémités de l'étrier (8).

9. Bande suivant les revendications 1 et 8, caractérisée par le fait que les extrémités (17), qui rentrent dans la bande, sont sensiblement parallèles aux sections (23), qui traversent la bande dans sa totalité, des éléments de fixation (16) (figure 3).
